# EUROPEAN PATENT APPLICATION

(11) **EP 1 762 589 A1**
(43) Date of publication of application: **14.03.2007**
(21) Application number: 05108337.6
(22) Date of filing: 12.09.2005
(51) Int. Cl.: C08J 9/38, C08J 9/33, C08G 18/10, C08G 18/76

(54) **Bonded foam having a low water uptake and method for producing that foam**

(71) Applicant: RECTICEL, 1200 Brussels (BE)
(72) Inventor: Kamprath, Axel, c/o Recticel, 9230 Wetteren (BE); Ehrentreich, Marcus, 87727 Babenhausen (DE)
(74) Representative: Van Reet, Joseph

(57) **Abstract**

The invention relates to a bonded foam, comprising foam particles of at least one reticulated polyurethane foam. This foam has a water uptake, determined at 25°C in accordance with the French standard UEAtc H.1 MOD1, of maximum 250 g/m², and has furthermore a very good drying capacity, so that it is well suited for underlay floor applications. These properties can be achieved at densities lower than 120 kg/m³ whilst still retaining the required mechanical properties. The invention also relates to a method to produce such a bonded foam.

## Description

The present invention relates to a bonded foam having a water uptake, determined at 25°C in accordance with the French standard UEAtc H.1 MOD1, of maximum 250 g/m² and consisting of particles, including polyurethane foam particles, bonded to one another by means of a binder. The method for producing such a bonded foam comprises the steps of providing an amount of particles which comprise polyurethane foam particles; applying a binder onto said particles; compressing the particles having the binder applied thereon; and allowing the binder to set to bond the particles in their compressed state to one another.

Bonded foams are usually made of waste produced during the manufacture of trim foam. The foam waste is shredded or cut into foam particles which are compressed and bonded to one another by means of a binder. Due to the compression step, the resulting bonded foam has usually a higher density than the foam from which it is produced.

In a number of applications of bonded foam it is important for the bonded foam to have a low water uptake. Bonded foam plates are for example often used as underlay for parquet or for other top floor layers. Especially when such underlay may come into contact with water, for example in kitchens or bathrooms or also when used in sport floors, a low water uptake is important in order to be able to maintain dry conditions preventing the growth of micro-organisms. In practice it has indeed been noticed that when using conventional open-celled bonded foams as floor underlay, the floors tend to smell after a while and growth of fungi and bacteria can almost never be avoided. This is due to the fact that those foams absorb a considerable amount of water and are almost impossible to dry without removing the top floor layers.

A bonded foam suitable for use under moist conditions is already disclosed in WO 01/00718. During the production of this bonded foam a water-repellent additive is incorporated in the foam to reduce its water uptake. Although this method works rather well for high density bonded foams, in particular for bonded foams having a density higher than 250 kg/m³, it was found that for low density bonded foams, having in particular a density of between 60 and 120 kg/m³, the water uptake cannot be sufficiently reduced for some critical applications. Moreover, the high density water-repellent bonded foams do not allow drainage of water from the upper floor layers to the base layer. Consequently when the top floor layers have become wet for example due to spilling of water, the water-repellent bonded foam underlay does not help in the drying of these upper floor layers.

An object of the present invention is therefore to provide a new type of bonded foam which also enables to achieve at lower densities a low water uptake and which has moreover better drying capabilities.

To this end, the bonded foam according to the invention is characterised in that the polyurethane foam particles in the bonded foam comprise particles of at least one reticulated polyurethane foam.

By the presence of reticulated polyurethane foam particles in the bonded foam instead of conventional polyurethane foam particles which are not treated with a water-repellent agent, the water uptake of the foam is reduced and the drying capabilities are improved. The reticulated polyurethane foam particles can be used either or not in combination with a water-repellent additive. An advantage of reticulated polyurethane foam particles is that they enable to achieve a low water uptake not only for higher but especially also for lower foam densities.

Reticulated polyurethane foams are usually produced from flexible open-celled foams having a skeletal framework of relatively heavy strands connected by very thin membranes, often called windows, which form the cell walls. In open-celled foams, some of the windows are open or torn in each cell, thus forming an interconnecting network open to fluid flow. Reticulation relates to methods for removing or breaking the cell windows of polyurethane foams. Mechanical, chemical and thermal methods for reticulating foams are known. As one example, foam may be reticulated by destroying substantially all of the windows with a high temperature flame front or explosion, which still leaves the strand network intact. Alternatively, the cell windows may be etched away using the hydrolysing action of water in the presence of an alkali metal hydroxide. Various reticulating methods of polyurethane foams are for example disclosed in US Patent Nos. 3 405 217, 3 423 338, 3 425 890 and 4 670 477.

Compared to conventional open-celled foams, the reticulated foams produced therefrom are generally softer. However, due to the compression of the reticulated foam particles in the bonded foam, they can also provide the hardness required in particular for floor underlay applications. It has now been found that the degree of compression and the amount of binder required to produce the bonded foam can be limited to such an extent that the bonded foam still has a low water uptake. This has been found quite by surprise since due to the skeletal structure of the reticulated foam particles it is not obvious that only a relatively small amount of binder has to be used to achieve the required mechanical properties and moreover since it is known for example from GB 1 063 463 that a too strong compression of a reticulated polyurethane foam not only increases the water uptake but even renders it water wicking.

In a preferred embodiment of the bonded foam according to the invention, the polyurethane foam particles comprise at least 70 weight %, preferably at least 80 weight %, more preferably at least 90 weight % and most preferably at least 95 weight % of said reticulated polyurethane foam particles.

The more reticulated polyurethane foam particles, the more the density of the bonded foam can be reduced whilst maintaining the required low water uptake. Moreover, the reticulated foam particles do not need to be treated with a water repellent agent so that, if used, the amount thereof can be reduced.

Preferably, the bonded foam has a density lower than 300 kg/m³, preferably lower than 200 kg/m³, more preferably lower than 150 kg/m³ and most preferably lower than 120 kg/m³.

The lower the density, the cheaper the bonded foam. Moreover, especially for lower foam densities a low water uptake could be achieved whilst the bonded reticulated polyurethane foam still provided the required mechanical properties for making it for example suitable as underlay for floors.

The present invention also relates to a new method for producing a bonded foam having a water uptake, determined at 25°C in accordance with the French standard UEAtc H.1 MOD1, of maximum 250 g/m². This method comprises the steps of providing an amount of particles which comprise polyurethane foam particles; applying a binder onto said particles; compressing the particles having the binder applied thereon; and allowing the binder to set to bond the particles in their compressed state to one another. The new feature of this method consists in that the polyurethane foam particles used to produce the bonded foam comprise particles of at least one reticulated polyurethane foam.

Other particularities and advantages of the invention will become apparent from the following description of some particular embodiments of the foam and the method according to the invention. This description is only given by way of example and is not intended to limit the scope of the invention as defined in the appended claims.

The bonded foam consists of particles bonded to one another by means of a binder. The particles comprise polyurethane foam particles, at least a number of which are particles of at least one reticulated polyurethane foam, in particular a flexible polyurethane foam which is preferably a polyether foam in view of its more hydrophobic nature than polyester foam. In addition to these polyurethane foam particles, the particles of the bonded foam may comprise other foam particles or also solid particles (filler particles) such as solid plastic, rubber, wood or cork particles. Preferably, the particles used to produce the bonded foam comprise however more than 75 weight %, more preferably more than 85 weight % of polyurethane foam particles.

The bonded foam according to the present invention has a water uptake, determined at 25°C in accordance with the French standard UEAtc H.1 MOD1, of at most 250 g/m², preferably of at most 200 g/m² and more preferably of at most 150 g/m². Such a low water uptake can be achieved by providing a sufficiently large amount of reticulated polyurethane foam particles in the bonded foam and optionally, when this amount is not large enough, by incorporating a water-repellent additive as disclosed in WO 01/00718 in the bonded foam. The polyurethane foam particles in the bonded foam preferably comprise at least 70 weight %, preferably at least 80 weight %, more preferably at least 90 weight % and most preferably at least 95 weight % of reticulated polyurethane foam particles. In this way, the water uptake of the foam is considerably reduced. Moreover, such an amount of reticulated polyurethane foam particles enable to reduce the density of the bonded foam whilst still maintaining the required reduced water uptake.

In a preferred embodiment, the bonded foam has a density lower than 300 kg/m³, preferably lower than 200 kg/m³, more preferably lower than 150 kg/m³ and most preferably lower than 120 kg/m³. In view of the required mechanical properties, the bonded foam will usually have a density higher than 40 kg/m³, preferably higher than 50 kg/m³ and more preferably higher than 60 kg/m³.

For producing the bonded foam an amount of particles comprising the polyurethane foam particles is provided, a binder is applied for example by spraying onto the particles, the particles are compressed and the binder is allowed to set to bond the particles in their compressed state to one another. When the particles comprise solid particles, it is clear that in the compressed state of the particles not all of the particles are in a compressed state.

As explained hereabove at least a portion of the polyurethane foam particles used to produce the bonded foam comprises reticulated polyurethane foam particles. The polyurethane foam particles, including the reticulated polyurethane foam particles, are usually produced from waste foam, in particular from trim foam produced as waste when cutting shapes out of larger foam pieces. The waste foam pieces are comminuted to particles of the desired size either by grinding or shredding or by cutting them as disclosed in EP-B-0 679 168. A subsequent sieving step enables to select the desired particle size range. Preferably the reticulated foam particles have such a size that at least 80 vol. %, preferably at least 90 vol. % of them comprise at least 30, preferably at least 40 and more preferably at least 50 complete cells. In this way, the foam properties, in particular the resilient properties are better maintained in the bonded foam.

The reticulated foam particles can be produced from one or more reticulated polyurethane foams having various average cell sizes. Preferably they are however produced from at least one reticulated polyurethane foam having an average cell size of at least 2 mm, preferably a least 3 mm and more preferably at least 4 mm. The larger this cell size, the stronger the foam particles may be compressed without increasing the water uptake by capillarity. For determining the average cell size of a reticulated polyurethane foam, a visual method is used making use of foam templates.

In a preferred embodiment, the amount of reticulated polyurethane foam and the average cell size of the reticulated foam or foams from which these particles are produced are selected in such a manner that the water uptake of the bonded foam is smaller than 200 g/m², and preferably smaller than 150 g/m².

Before applying the binder onto the particles, the polyurethane foam particles have a predetermined apparent density. The apparent density is a measure commonly used to describe the density of loose, uncompressed foam particles (flocks). Since for large amounts of foam particles, the density increases towards the bottom, the apparent density needs to be measured for a small volume. In practice, the apparent density is measured by pouring 10 litres of them (without compression) in a cylindrical recipient, having a diameter of 25 cm. The apparent density of the foam particles is in practice always smaller than the average density of the foam or foams from which they are made.

When the binder is allowed to set, the polyurethane foam particles are preferably compressed to such an extent that they have an average density of at least twice, preferable of at least three times the initial apparent density of those foam particles. When determining the average density of the compressed foam particles, the weight of the binder may not be included in the weight of the foam particles so that the compression factor corresponds to the ratio between the average density and the apparent density. The higher this compression factor, the better the mechanical properties of the bonded foam, more particularly the higher its hardness. The polyurethane foam particles are preferably compressed to such an extent that the bonded foam has a pressure deformation modulus (DVM: DruckVerformungsModul) greater than 0.015 N/mm², preferably greater than 0.020 N/mm² and more preferably greater than 0.030 N/mm², measured according to the DVM test method of the German Institute für Sportbodentechnik (dated November 26, 2002). To determine the DVM according to the referred method, a foam sample is first precompressed to 40 % of its original thickness during 1 minute. After decompression, the sample is compressed to a 20% deformation at a compression speed of 2 x sample thickness (mm) per minute, and the force is measured at this 20 % deformation.

Since the water uptake of the bonded foam may increase by capillary effects when the reticulated foam particles are compressed too strongly (depending on the cell size of the reticulated foam), the polyurethane foam particles are preferably compressed to such an extent that they have, in their compressed state, an average density which comprises at the most ten times, preferably at the most eight times and more preferably at the most six times the apparent density of those foam particles.

The binder used to bond the particles to one another is preferably a non foam-forming binder, i.e. a binder which has, after setting, a density higher than 300 kg/m³ and preferably higher than 500 kg/m³. The binder is for example an elastomeric rubber-based binder or a polyurethane glue, in particular a polyurethane prepolymer having free NCO groups which can be cured in the presence of moisture, in particular in the presence of steam which is blown through the foam particles to cure the glue. Usually such prepolymers have a free NCO content of 5 to 25%, and more particularly between 5 and 15 %. The polyurethane prepolymer is preferably a prepolymer made with TDI and/or MDI and conventional polyether polyols used for the production of soft polyurethane foams.

It has been found that, notwithstanding the skeletal structure of the reticulated foam particles, only a relatively small amount of binder is required to bond the reticulated foam particles to one another, more particularly an amount of binder which has only a minor effect on the density of the bonded foam and thus on any capillary water uptake of the foam. In a preferred embodiment, the binder is applied on the particles used to produce the bonded foam in an amount comprising between 3 and 20 %, preferably between 5 and 15 %, of the weight of those particles.

The invention as described hereabove enables to produce a bonded foam which is particularly suited as underlay for floors, in particular as underlay for sport floors. Due to the reticulated cell structure, the water uptake by absorption is sufficiently small and, when the floor has become wet for example by having spilled water or another liquid onto the floor, the spilled water can flow quite easily through the bonded foam layer enabling thus a much quicker drying of the upper floor layers. In sport floors these upper floor layers comprise for example a linoleum or polyurethane top layer supported by a wooden pressure distribution layer. In practice a closed cell polyethylene foam is often used as underlay in sport floors. Compared to this polyethylene foam, the bonded reticulated polyurethane foam has the advantage that its recovery after creep, measured in accordance with the French standard NF P-75 301 is much better and that its height and hardness losses after dynamic fatique (70 000 impacts with load of 750 N measured in accordance with EN/ISO 3385) are much smaller. Moreover due to its closed cell nature, the polyethylene foam does not allow a drainage of liquid from the top floor layers to the base layer. An additional advantage of the bonded reticulated foam of the present invention is that it can be produced from waste material.

### EXAMPLE

Reticulated polyurethane foam particles (flocks) were made by shredding a mixture of skin free reticulated polyurethane foam pieces so that foam particles with a size of up to 30 mm were obtained. The reticulated polyurethane foam pieces consisted mainly of a flexible polyether foam having an average cell size of about 4 mm and a density of about 31 kg/m³. A small amount of reticulated polyurethane foam pieces, having an average cell size of between 1 and 2 mm, was however also present in the mixture of foam pieces. The shredded foam particles comprised between about 30 and 200 complete cells. A sample of 60 x 60 x 30 mm of the original reticulated polyurethane foam (cell size of about 4 mm) was tested in accordance with the DVM test method of the German Institute für Sportbodentechnik (IST), which gave a pressure deformation modulus (DVM value) of about 0.022 N/mm².

The shredded foam particles had an apparent density of about 25 kg/m³. Per kilogram of these foam particles 100 grams of a binder consisting of a polyurethane prepolymer based on a mixture of 2,4- and 2,6-toluene diisocyanate and a polyether polyol was sprayed onto the foam particles while stirring them.

After some additional mixing, the mixture was poured into a mould and the top lid of the mould was closed to compress the foam particles to an average density of about 73 kg/m³, i.e. the foam particles were compressed to about one third of their volume. The reaction of the binder was then obtained by pressing superheated steam through the perforated bottom of the mould for about 8 minutes. The bonded foam was removed from the mould and was allowed to dry and postcure for 24 hours. Out of the produced foam block sheets were cut having a thickness of about 2 cm. The bonded foam had a density of about 80 kg/m³.

### Preparation of wet samples

To prepare a wet bonded foam sample, the foam sample was squeezed under water and was allowed to drip dry for one hour. The weight gain of the samples (100x100x20 mm) was on average about 100 %.

### Hardness

The CLD40 hardness (Compression Load Deflection at 40% compression) of the bonded foam was measured in accordance with ISO 3386-1 for dry and wet samples of 100x100x50 mm. The dry samples had a CLD40 value of about 8.4 kPa whilst the wet samples had a CLD value of about 6.4 kPa. The wet foams were thus about 25% softer.

The DVM modulus (DruckVerformungsModul) was measured for dry and wet samples of 60x60x30 mm. The dry samples had a DVM modulus of about 0.067 N/mm² whilst the wet samples had a DVM modulus of about 0.043 N/mm². The closed cell polyethylene foams which are now used as underlay for sport floors have a DVM modulus of about 0.072 N/mm². The bonded foam prepared in this example is thus perfectly suitable to replace this material.

### Recovery after creep

The creep was determined in accordance with NF P-75 301 on a sample of 200x200x20 mm. The results are given in the following table.

**Table 1: Creep of the bonded reticulated foam during 4 days under increasing pressure.**

| Time (hours) | Pressure (MPa) | Indentation (mm) |
|---|---|---|
| 24 | 0.01 | 5.1 |
| 24 | 0.02 | 9.6 |
| 24 | 0.03 | 12.1 |
| 24 | 0.04 | 13.2 |
| 1 | 0.001 | 4.6 |

### Elasticity

The elasticity or ball rebound was determined in accordance with ASTM D3574 for dry and wet samples of 100x100 x50 mm. The elasticity of the dry sample comprised 33 % whilst the elasticity of the wet sample comprised 30 %. The presence of water in the bonded reticulated foam has thus only a minor effect on the elasticity.

### Dynamic fatigue

The dynamic fatigue was determined in accordance with EN/ISO 3385. on samples of 200x200x20 mm. After 70 000 impacts with a load of 750 N, the height of the sample was reduced with only 10% (for the closed cell polyethylene foam the height was reduced with 32%) and the force required for a 40% compression of the sample was even increased with 18 % (for the closed cell polyethylene foam this force was reduced with 86%).

### Water uptake

The water uptake was measured at 25°C in accordance with UEAtc H.1 MOD1 for two samples of 150 x 150 x 20 mm (the test was performed as described in WO 01/00718). The maximum water uptake of both samples was 106 g/m² or 5.1 weight %. The maximum water uptake of two samples of the original reticulated polyurethane foam (prime foam) was 50.2 g/m² or 11.0 weight %.

### Drying capacity

A wet sample of 100x100x20mm was allowed to dry for four days at 23°C, 50% relative humidity. After those four days the sample had its original dry weight.

## Claims

1. A bonded foam having a water uptake, determined at 25°C in accordance with the French standard UEAtc H.1 MOD1, of maximum 250 g/m² and consisting of particles, including polyurethane foam particles, bonded to one another by means of a binder,
**characterised in that** said polyurethane foam particles comprise particles of at least one reticulated polyurethane foam.

2. A bonded foam according to claim 1, **characterised in that** it has a water uptake, determined at 25°C in accordance with the French standard UEAtc H.1 MOD1, of maximum 200 g/m², preferably of maximum 150 g/m².

3. A bonded foam according to claim 1 or 2, **characterised in that** it has a density lower than 300 kg/m³, preferably lower than 200 kg/m³, more preferably lower than 150 kg/m³ and most preferably lower than 120 kg/m³.

4. A bonded foam according to any one of the claims 1 to 3,
**characterised in that** said polyurethane foam particles comprise at least 70 weight %, preferably at least 80 weight %, more preferably at least 90 weight % and most preferably at least 95 weight % of said reticulated polyurethane foam particles.

5. A method for producing a bonded foam according to any one of the claims 1 to 4 having a water uptake, determined at 25°C in accordance with the French standard UEAtc H.1 MOD1, of maximum 250 g/m², which method comprises the steps of:
- providing an amount of particles which comprise polyurethane foam particles;
- applying a binder onto said particles;
- compressing the particles having the binder applied thereon; and
- allowing the binder to set to bond the particles in their compressed state to one another,
**characterised in that** said polyurethane foam particles comprise particles of at least one reticulated polyurethane foam.

6. A method according to 5, **characterised in that** said polyurethane foam particles comprise particles of at least one reticulated polyurethane foam which has an average cell size of at least 2 mm, preferably of at least 3 mm and more preferably of at least 4 mm.

7. A method according to claim 5 or 6, **characterised in that** the polyurethane foam particles used to provide said amount of particles have a predetermined apparent density and are compressed to such an extent during said compression step that they have, in said compressed state, an average density which comprises between two and ten times said apparent density.

8. A method according to claim 7, **characterised in that that** the polyurethane foam particles are compressed to such an extent during said compression step that they have, in said compressed state, an average density which comprises at least three times said apparent density.

9. A method according to claim 7 or 8, **characterised in that** the polyurethane foam particles are compressed to such an extent during said compression step that they have, in said compressed state, an average density which comprises at the most eight, preferably at the most six times said apparent density.

10. A method according to any one of the claims 5 to 9,
**characterised in that** said binder is applied in an amount comprising between 3 and 20 %, preferably between 5 and 15 %, of the weight of said amount of particles.

11. A method according to any one of the claims 5 to 10,
**characterised in that** the polyurethane foam particles are compressed to such an extent in said compressed state that the bonded foam has a pressure deformation modulus (DVM: DruckVerformungsModul), measured in accordance with the DVM test method of the German Institute für Sportbodentechnik dated November 26, 2002, greater than 0.015 N/mm², preferably greater than 0.020 N/mm² and more preferably greater than 0.030 N/mm².

12. A method according to any one of the claims 5 to 11,
**characterised in that** the amount of particles of said at least one reticulated polyurethane foam comprised in said polyurethane particles and said average cell size are selected in such a manner that the water uptake of the bonded foam is smaller than 200 g/m², and preferably smaller than 150 g/m².

13. A method according to any one of the claims 5 to 12,
**characterised in that** said binder is a non foam-forming binder having after setting a density higher than 300 kg/m³ and preferably higher than 500 kg/m³.

14. A method according to any one of the claims 5 to 13,
**characterised in that** at least 80 vol. %, preferably at least 90 vol. %, of said reticulated polyurethane foam particles comprise at least 30, preferably at least 40 and more preferably at least 50 complete cells.
